# EUROPÄISCHE PATENTANMELDUNG

(11) **EP 4 295 729 A1**
(43) Veröffentlichungstag der Anmeldung: **27.12.2023**
(21) Anmeldenummer: 23174775.9
(22) Anmeldetag: 23.05.2023
(51) Int. Cl.: A47J 27/62, A47J 36/32, H05B 1/02, F24C 7/08

(54) **AUFSTELLGERÄT FÜR EIN KOCHFELD, SYSTEM MIT EINEM KOCHFELD UND EINEM AUFSTELLGERÄT UND VERFAHREN ZUM BETRIEB EINES SYSTEMS**

(30) Priorität: 22.06.2022 BE 202205493
(71) Anmelder: Miele & Cie. KG, 33332 Gütersloh (DE)
(72) Erfinder: Müller, Christoph, 32289 Rödinghausen (DE); Werneke, Dominik, 33615 Bielefeld (DE); Vogt, Daniel, 32257 Bünde (DE)

(57) **Zusammenfassung**

Die Erfindung betrifft ein Aufstellgerät (8) für ein Kochfeld (4), umfassend einen Griff (12) zur Handhabung des Aufstellgeräts (8), eine Aufstellgerätsteuerung, eine Aufstellgerätsendeeinheit zur Signalübertragung von dem Aufstellgerät (8) zu dem Kochfeld (4), eine Aufstellgeräteingabeeinheit (14) mit mindestens einem in dem Griff (12) integrierten Eingabebereich (16, 18, 20) zur Eingabe eines Benutzerbefehls durch einen Benutzer des Aufstellgeräts (8) und einen Energiespeicher (22) zur Energieversorgung der Aufstellgerätsteuerung, der Aufstellgerätsendeeinheit und der Aufstellgeräteingabeeinheit (14), wobei mittels des Benutzerbefehls das Kochfeld (4) ansteuerbar ist, dadurch gekennzeichnet, dass der Energiespeicher (22) als ein nicht aufladbarer und nicht wechselbarer Energiespeicher (22) ausgebildet ist.

Ferner betrifft die Erfindung ein System (2) und ein Verfahren.

## Beschreibung

### Aufstellgerät für ein Kochfeld, System mit einem Kochfeld und einem Aufstellgerät und Verfahren zum Betrieb eines Systems

Die Erfindung betrifft ein Aufstellgerät für ein Kochfeld nach dem Oberbegriff des Patentanspruchs 1, ein System mit einem Kochfeld und einem Aufstellgerät nach dem Oberbegriff des Patentanspruchs 5 und ein Verfahren zum Betrieb eines derartigen Systems.

Derartige Aufstellgeräte für Kochfelder, Systeme mit einem Kochfeld und einem Aufstellgerät sowie Verfahren zum Betrieb derartiger Systeme sind in einer Vielzahl von Ausführungsformen bereits vorbekannt. Die bekannten Aufstellgeräte umfassen beispielsweise einen Griff zur Handhabung des Aufstellgeräts, eine Aufstellgerätsteuerung, eine Aufstellgerätsendeeinheit zur Signalübertragung von dem Aufstellgerät zu dem Kochfeld, eine Aufstellgeräteingabeeinheit mit mindestens einem in dem Griff integrierten Eingabebereich zur Eingabe eines Benutzerbefehls durch einen Benutzer des Aufstellgeräts und einen mit der Aufstellgerätsteuerung, der Aufstellgerätsendeeinheit und der Aufstellgeräteingabeeinheit energieübertragend verbundenen Energiespeicher zur Energieversorgung der Aufstellgerätsteuerung, der Aufstellgerätsendeeinheit und der Aufstellgeräteingabeeinheit, wobei die Aufstellgerätsendeeinheit und die Aufstellgeräteingabeeinheit mit der Aufstellgerätsteuerung signalübertragend verbunden sind, und wobei mittels des Benutzerbefehls das Kochfeld ansteuerbar ist.

Ferner sind als Pfannen und Töpfe ausgebildete Aufstellgeräte bekannt, die mit einem als Induktionskochfeld ausgebildeten Kochfeld ein System bilden. So schlägt die EP 3 001 771 B1 ein Verfahren zur Detektion der Identität eines Topfes auf einer Kochstelle eines Kochfelds vor. Das Kochfeld weist ein Topfsensormittel auf, mittels dem das Vorhandensein eines Topfes auf der Kochstelle detektiert werden soll. Der Topf weist einen Temperatursensor und einen Sender auf, wobei der Sender mindestens zwei Datensätze an einen Empfänger einer Kochfeldsteuerung übertragen soll. Der erste Datensatz soll eine Identifizierungseinrichtung für einen einzelnen Topf darstellen, während der zweite Datensatz den mittels des Temperatursensors gemessenen Temperaturzustand des Topfes betreffen soll. Wenn das Topfsensormittel das Vorhandensein eines beliebigen Topfes detektiert hat, soll mittels einer Leistungsprofilvorlage ein Heizelement des Kochfelds aktiviert werden, um eine Temperaturveränderung im auf der Kochstelle aufgestellten Topf zu bewirken. Aufgrund der thermischen Kapazität des Topfes liegt dabei immer eine Verzögerung der Temperaturveränderung zu der Leistungsprofilvorlage vor. Mittels der an die Kochfeldsteuerung zurückgesendeten Temperaturinformationen soll dann bestimmt werden, ob das vom Temperatursensor am Topf detektierte Temperaturprofil zu der vom Heizelement erzeugten Vorlage des Leistungsprofils korrespondiert. Falls Temperaturprofil und Leistungsprofilvorlage zueinander korrespondieren, soll der Topf mit der Topfidentifikationseinrichtung als auf diese Kochstelle aufgestellt erkannt werden.

Der Erfindung stellt sich somit das Problem, ein Aufstellgerät für ein Kochfeld, ein System mit einem Kochfeld und einem Aufstellgerät sowie ein Verfahren zum Betrieb eines derartigen Systems zu verbessern.

Erfindungsgemäß wird dieses Problem durch ein Aufstellgerät mit den Merkmalen des Patentanspruchs 1 gelöst, das dadurch gekennzeichnet ist, dass der Energiespeicher als ein nicht aufladbarer und nicht wechselbarer Energiespeicher ausgebildet ist. Vorzugsweise sind zudem der Energiespeicher, die Aufstellgerätsteuerung, die Aufstellgerätsendeeinheit und die Aufstellgeräteingabeeinheit derart aufeinander abgestimmt ausgebildet und eingerichtet, dass die Energieversorgung der Aufstellgerätsteuerung, der Aufstellgerätsendeeinheit und der Aufstellgeräteingabeeinheit bei einer täglichen Nutzung des Aufstellgeräts von mindestens 30 min. über eine Lebensdauer des Aufstellgeräts von mindestens zehn Jahren lediglich mittels des Energiespeichers gewährleistet ist. Ferner wird dieses Problem durch ein System mit den Merkmalen des Patentanspruchs 5 und ein Verfahren zum Betrieb eines Systems mit den Merkmalen des Patentanspruchs 8 gelöst. Vorteilhafte Ausgestaltungen und Weiterbildungen der Erfindung ergeben sich aus den nachfolgenden Unteransprüchen.

Der mit der Erfindung erreichbare Vorteil besteht insbesondere darin, dass ein Aufstellgerät für ein Kochfeld, ein System mit einem Kochfeld und einem Aufstellgerät sowie ein Verfahren zum Betrieb eines derartigen Systems verbessert sind. Aufgrund der erfindungsgemäßen Ausbildung des Aufstellgeräts für ein Kochfeld, des Systems mit einem Kochfeld und einem Aufstellgerät und des Verfahrens zum Betrieb eines derartigen Systems ist es möglich, ein Aufstellgerät und ein System mit einem Aufstellgerät anzubieten, bei dem der Betrieb des Aufstellgeräts und eine damit verbundene Assistenzfunktion bei der Bedienung des Kochfelds des Systems mittels des Aufstellgeräts über die Lebenszeit des Aufstellgeräts ermöglicht ist, ohne das hierfür eine Ladeinfrastruktur zum Aufladen des in dem Aufstellgerät integrierten Energiespeichers erforderlich ist. Entsprechend sind die Kosten des erfindungsgemäßen Aufstellgeräts und des erfindungsgemäßen Systems im Vergleich zu Konzepten mit einer derartigen Ladeinfrastruktur wesentlich reduziert. Ferner ist der Platzbedarf an dem Aufstellgerät für die Energieversorgung des Aufstellgeräts erheblich verringert. Aufgrund der nicht vorhandenen Ladeinfrastruktur kann das Aufstellgerät mit einfacheren Mitteln in gewünschter Weise spülmaschinengeeignet ausgebildet werden. Darüber hinaus fällt während der Lebenszeit des Aufstellgeräts kein Sondermüll in Form von ausgewechselten Batterien oder dergleichen an.

Das Aufstellgerät und das System sind nach Art, Funktionsweise, Dimensionierung und Material in weiten geeigneten Grenzen frei wählbar. Beispielsweise kann das Aufstellgerät als eine Pfanne oder ein Topf ausgebildet sein. Jedoch sind auch andere Ausführungsformen wie Wasserkocher, Bräter oder dergleichen denkbar. Entsprechend der Ausführungsform des Aufstellgeräts kann das Aufstellgerät über einen Griff oder mehrere Griffe verfügen, wobei die erfindungsgemäße Ausbildung des Griffs bei lediglich einem der Griffe oder einer Mehrzahl der Griffe vorliegen kann. Der mindestens eine Eingabebereich kann beispielsweise als ein berührungsempfindlicher Bereich des Griffs ausgebildet sein. In anderen Ausführungsformen kann der mindestens eine Eingabebereich auch als ein näherungssensitiver Bereich ausgebildet sein. Der mindestens eine Eingabebereich kann dabei von außen sichtbar oder unsichtbar an dem Griff angeordnet sein. Beispielsweise kann der mindestens eine Eingabebereich in den Griff vollständig integriert sein, so dass dieser Eingabebereich von außen, ohne zusätzliche Maßnahmen wie beispielsweise eine Hinterleuchtung, weder sichtbar noch fühlbar ist. Das Aufstellgerät kann für ein induktives Kochfeld geeignet ausgebildet sein. Dies ist jedoch nicht zwingend erforderlich. Das erfindungsgemäße Aufstellgerät kann für alle denkbaren Kochfeldtypen geeignet ausgebildet sein.

Eine vorteilhafte Weiterbildung des erfindungsgemäßen Aufstellgeräts sieht vor, dass der mindestens eine Eingabebereich der Aufstellgeräteingabeeinheit eine ein- und ausschaltbare Hinterleuchtung aufweist, wobei die Hinterleuchtung mittels der Aufstellgerätsteuerung zum einen in Abhängigkeit einer Annäherung einer Hand des Benutzers an das Aufstellgerät und/oder durch eine Berührung des Aufstellgeräts mit der Hand und/oder durch eine Bewegung des Aufstellgeräts und/oder durch eine Interaktion des Benutzers mit dem Kochfeld automatisch einschaltbar und zum anderen in Abhängigkeit einer Betätigung des Eingabebereichs und/oder eines Zeitablaufs eines in der Aufstellgerätsteuerung integrierten Timers automatisch ausschaltbar ist. Auf diese Weise ist die Freiheit in der optischen und haptischen Gestaltung des erfindungsgemäßen Aufstellgeräts und insbesondere von dessen Griff wesentlich erhöht. Siehe hierzu auch die obigen Ausführungen bezüglich des mindestens einen Eingabebereichs. Die jeweilige Hinterleuchtung kann sich dabei vollflächig über den gesamten korrespondierenden Eingabebereich oder lediglich über einen Teil dieses Eingabebereichs erstrecken. Auch ist es denkbar, dass die Hinterleuchtung lediglich als eine umfangsseitige Umrandung des jeweiligen Eingabebereichs ausgebildet ist. Aufgrund der mindestens einen Einschaltbedingung und der mindestens einen Ausschaltbedingung für die jeweilige Hinterleuchtung ist eine energiesparende Betriebsweise der Hinterleuchtung bei gleichzeitig hinreichender Kennzeichnung des jeweiligen Eingabebereichs ermöglicht. Ferner ist dies auf eine bedienerfreundliche Art realisiert.

Eine weitere vorteilhafte Weiterbildung des erfindungsgemäßen Aufstellgeräts sieht vor, dass das Aufstellgerät eine mit dem Energiespeicher energieübertragend und mit der Aufstellgerätsteuerung signalübertragend verbundene Aufstellgerätbetriebsanzeige zur Anzeige eines Betriebs des Aufstellgeräts aufweist, wobei der Energiespeicher, die Aufstellgerätsteuerung, die Aufstellgerätsendeeinheit, die Aufstellgeräteingabeeinheit und die Aufstellgerätbetriebsanzeige derart aufeinander abgestimmt ausgebildet und eingerichtet sind, dass die Energieversorgung der Aufstellgerätsteuerung, der Aufstellgerätsendeeinheit, der Aufstellgeräteingabeeinheit und der Aufstellgerätbetriebsanzeige bei einer täglichen Nutzung des Aufstellgeräts von mindestens 30 min. über eine Lebensdauer des Aufstellgeräts von mindestens zehn Jahren lediglich mittels des Energiespeichers gewährleistet ist, bevorzugt, dass die Aufstellgerätbetriebsanzeige zur Anzeige einer Beheizung des Aufstellgeräts mittels einer Kochstelle des Kochfelds, auf der das Aufstellgerät aufgestellt ist, ausgebildet ist. Hierdurch ist es zum einen möglich, dem Benutzer des Aufstellgeräts anzuzeigen, dass das Aufstellgerät in Betrieb ist. Zum anderen ist dadurch der Energieverbrauch des Aufstellgeräts im Vergleich zu beispielsweise einer dazu alternativen Hinterleuchtung der Eingabebereiche bei einer Mehrzahl von Eingabebereichen weniger stark erhöht. Eine derartige Betriebsanzeige des Aufstellgeräts ist insbesondere für die bevorzugte Ausführungsform dieser Weiterbildung vorteilhaft, da der Benutzer des Aufstellgeräts dadurch wirksam vor einer ungewünschten Berührung des möglicherweise heißen Aufstellgeräts gewarnt wird.

Entsprechend sieht eine vorteilhafte Weiterbildung des erfindungsgemäßen Verfahrens vor, dass die Aufstellgerätbetriebsanzeige einen Betrieb des Aufstellgeräts, bevorzugt eine Beheizung des Aufstellgeräts mittels einer Kochstelle des Kochfelds, auf der das Aufstellgerät aufgestellt ist, unabhängig von einer etwaigen Hinterleuchtung des mindestens einen Eingabebereichs der Aufstellgeräteingabeeinheit automatisch anzeigt.

Eine andere vorteilhafte Weiterbildung des erfindungsgemäßen Aufstellgeräts sieht vor, dass die Aufstellgerätsteuerung und/oder die Aufstellgerätsendeeinheit und/oder die Aufstellgeräteingabeeinheit und/oder die Aufstellgerätbetriebsanzeige und/oder der Energiespeicher vollständig in dem Griff des Aufstellgeräts angeordnet sind/ist. Auf diese Weise ist die vorgenannte Elektronik des Aufstellgeräts zum einen mehr oder weniger kompakt an einem Ort des Aufstellgeräts konzentriert. Entsprechend ist die Lagerhaltung und die Herstellung des erfindungsgemäßen Aufstellgeräts erleichtert. Ferner ist es dadurch möglich, beispielsweise den Griff mit einem Teil oder gar der ganzen Elektronik von einem Zulieferer zu beziehen. Darüber hinaus ist die gegenüber Wärme empfindliche Elektronik besser vor einer Wärmeeinwirkung aufgrund einer Beheizung des auf die Kochstelle aufgestellten Aufstellgeräts geschützt. Sofern die vorgenannte Elektronik insgesamt in dem Griff integriert ist, kann das Aufstellgerät beispielsweise auch als ein einwandiges Aufstellgerät ausgebildet sein, ohne, dass dadurch der optische Gesamteindruck des Aufstellgeräts oder dessen Benutzerfreundlichkeit darunter leidet.

Eine vorteilhafte Weiterbildung des erfindungsgemäßen Systems sieht vor, dass das Kochfeld eine Mehrzahl von Kochstellen aufweist, wobei die Kochfeldsteuerung und die Aufstellgerätsteuerung derart ausgebildet und eingerichtet sind, dass eine automatische Zuordnung des auf eine der Mehrzahl von Kochstellen aufgestellten Aufstellgeräts zu dieser Kochstelle derart erfolgt, dass die dieser Kochstelle zugeordnete Kochfeldeingabeeinheit mittels der Zuordnung automatisch aktivierbar ist, bevorzugt, dass diese Kochfeldeingabeeinheit mittels der Zuordnung im Vergleich zu einem Rest der Kochfeldeingabeeinheiten und/oder zu einem Rest einer Oberfläche des Kochfelds oder einer Kochfeldbedienblende des Kochfelds optisch hervorhebbar ist. Hierdurch ist der Bedienkomfort für den Benutzer des Systems, bei dem Normalfall eines Kochfelds mit einer Mehrzahl von Kochstellen, wesentlich verbessert. Ferner ist dadurch der Schutz des Benutzers des Systems zusätzlich erhöht, da Heizungen, die zu Kochstellen des Kochfelds korrespondieren, auf denen kein Aufstellgerät zwecks Beheizung aufgestellt ist, erst gar nicht mittels der diesen Kochstellen zugeordneten Kochfeldeingabeeinheiten eingeschaltet werden können. Erst mit der vorgenannten Aktivierung der jeweiligen Kochfeldeingabeeinheit ist eine manuelle Einstellung der Heizleistung der mit dieser Kochfeldeingabeeinheit einstellbaren Heizung ermöglicht. Die bevorzugte Ausführungsform dieser Weiterbildung ist insbesondere vorteilhaft, da lediglich die aktuell benötigte Kochfeldeingabeeinheit für den Benutzer des Systems sichtbar ist, zumindest jedoch optisch hervorgehoben ist. Somit ist die Bedienung des Systems für den Benutzer intuitiv gestaltet.

Entsprechend sieht eine vorteilhafte Weiterbildung des erfindungsgemäßen Verfahrens vor, dass die automatische Zuordnung des auf eine der Mehrzahl von Kochstellen aufgestellten Aufstellgeräts zu dieser Kochstelle derart erfolgt, dass die dieser Kochstelle zugeordnete Kochfeldeingabeeinheit mittels der Zuordnung automatisch aktiviert wird, bevorzugt, dass diese Kochfeldeingabeeinheit mittels der Zuordnung im Vergleich zu einem Rest der Kochfeldeingabeeinheiten und/oder zu einem Rest einer Oberfläche des Kochfelds oder einer Kochfeldbedienblende des Kochfelds optisch hervorgehoben wird.

Eine vorteilhafte Weiterbildung der vorgenannten Weiterbildung des erfindungsgemäßen Systems sieht vor, dass die jeweilige Kochfeldeingabeeinheit eine Assistenzfunktionsanzeige aufweist, wobei mittels der Assistenzfunktionsanzeige eine Vornahme einer mittels des vorgenannten Benutzerbefehls vorgenommenen Einstellung der Heizleistung der Heizung anzeigbar ist, auf deren zugeordneter Kochstelle das Aufstellgerät aufgestellt ist. Auf diese Weise ist für den Benutzer an dem Kochfeld klar und deutlich erkennbar, dass die Einstellung der Heizleistung bei der vorgenannten Heizung mittels des Aufstellgeräts vorgenommen worden ist. Entsprechend ist beispielsweise eine Abschaltung einer Hinterleuchtung der Eingabebereiche nach erfolgter Vornahme des Benutzerbefehls zwecks Energieeinsparung bei dem erfindungsgemäßen Aufstellgerät möglich, ohne, dass dadurch die obige Information für den Benutzer des Systems verloren geht.

Entsprechend sieht eine vorteilhafte Weiterbildung des erfindungsgemäßen Verfahrens vor, dass mittels der Assistenzfunktionsanzeige die Vornahme einer mittels des vorgenannten Benutzerbefehls vorgenommenen Einstellung der Heizleistung angezeigt wird.

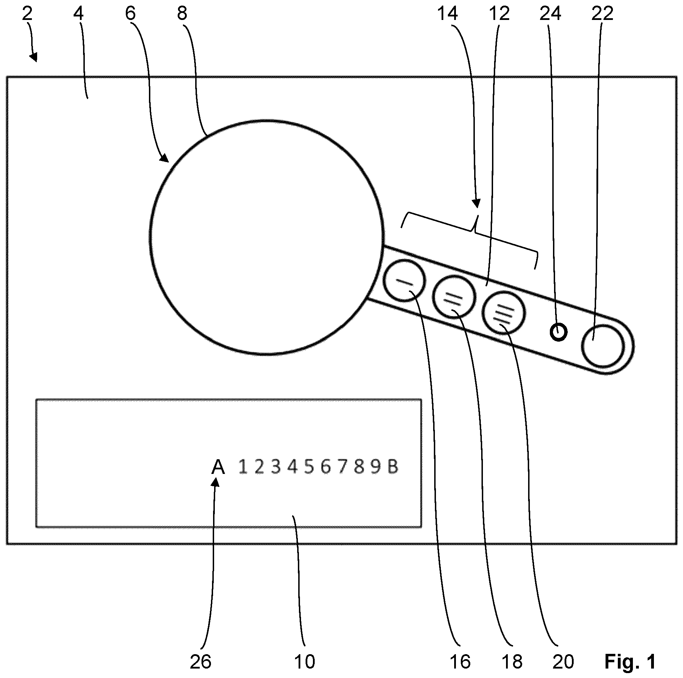

Ein Ausführungsbeispiel der Erfindung ist in den Zeichnungen rein schematisch dargestellt und wird nachfolgend näher beschrieben. Es zeigt die einzige Figur
- Figur 1: ein Ausführungsbeispiel des erfindungsgemäßen Systems zur Durchführung des erfindungsgemäßen Verfahrens in einer teilweisen Draufsicht.

In der Fig. 1 ist ein Ausführungsbeispiel des erfindungsgemäßen Systems zur Durchführung des erfindungsgemäßen Verfahrens rein exemplarisch dargestellt.

Das System 2 umfasst zum einen ein als Induktionskochfeld ausgebildetes Kochfeld 4 mit einer nicht dargestellten Kochfeldsteuerung und mit beispielsweise vier jeweils mittels einer ebenfalls nicht dargestellten Heizung des Kochfelds 4 beheizbaren Kochstellen 6 und zum anderen ein als Induktionskochtopf ausgebildetes Aufstellgerät 8 zum Aufstellen auf eine der Kochstellen 6 zwecks Beheizung des Aufstellgeräts 8 mittels der dieser Kochstelle 6 zugeordneten Heizung, wobei das Kochfeld 4 für die jeweilige Kochstelle 6 eine Kochfeldeingabeeinheit 10 zur manuellen Einstellung einer Heizleistung der dieser Kochstelle 6 zugeordneten Heizung aufweist, und wobei die Heizung und die Kochfeldeingabeeinheit 10 signalübertragend mit der Kochfeldsteuerung verbunden sind. In der Fig. 1 sind lediglich eine der üblicherweise vier, insgesamt bis zu sechs, Kochstellen 6 und lediglich die dieser Kochstelle 6 zugeordnete Kochfeldeingabeeinheit 10 dargestellt. Die Kochfeldeingabeeinheit 10 ist hier als eine kombinierte Anzeige- und Bedieneinheit mit einer Mehrzahl von aus der Fig. 1 ersichtlichen Ziffern und Buchstaben ausgebildet, wobei die Kochfeldeingabeeinheit 10 in einem deaktivierten Zustand der Kochfeldeingabeeinheit 10, in dem eine manuelle Eingabe einer Heizleistung für die dieser Kochfeldeingabeeinheit 10 zugeordnete Heizung schaltungstechnisch nicht ermöglicht ist, auf dem Kochfeld 4 für den Benutzer auf dem Fachmann an sich bekannte Art und Weise kaum sichtbar ist. Die übrigen, nicht dargestellten Kochstellen, Kochfeldeingabeeinheiten und Heizungen sind analog zu der dargestellten Kochstelle 6, der dargestellten Kochfeldeingabeeinheit 10 und der diesen zugeordneten Heizung ausgebildet und eingerichtet. Die Erfindung ist im Unterschied dazu auch bei sogenannten Flächenkochfeldern vorteilhaft einsetzbar.

Das Aufstellgerät 8 umfasst einen Griff 12 zur Handhabung des Aufstellgeräts 8, eine nicht dargestellte Aufstellgerätsteuerung, eine ebenfalls nicht dargestellte Aufstellgerätsendeeinheit zur Signalübertragung von dem Aufstellgerät 8 zu dem Kochfeld 4, eine Aufstellgeräteingabeeinheit 14 mit insgesamt drei in dem Griff 12 integrierten Eingabebereichen 16, 18, 20 zur Eingabe eines Benutzerbefehls durch einen nicht dargestellten Benutzer des Systems 2 und einen mit der Aufstellgerätsteuerung, der Aufstellgerätsendeeinheit und der Aufstellgeräteingabeeinheit 14 energieübertragend verbundenen Energiespeicher 22 zur Energieversorgung der Aufstellgerätsteuerung, der Aufstellgerätsendeeinheit und der Aufstellgeräteingabeeinheit 14, wobei die Aufstellgerätsendeeinheit und die Aufstellgeräteingabeeinheit 14 mit der Aufstellgerätsteuerung signalübertragend verbunden sind, und wobei mittels des Benutzerbefehls das Kochfeld 4 ansteuerbar ist.

Die Eingabebereiche 16, 18, 20 der Aufstellgeräteingabeeinheit 14 weisen jeweils eine ein- und ausschaltbare Hinterleuchtung auf, wobei die nicht dargestellte Hinterleuchtung mittels der Aufstellgerätsteuerung zum einen in Abhängigkeit einer Annäherung einer ebenfalls nicht dargestellten Hand des Benutzers an das Aufstellgerät 8 und/oder durch eine Berührung des Aufstellgeräts 8 mit der Hand und/oder durch eine Bewegung des Aufstellgeräts 8 und/oder durch eine Interaktion des Benutzers mit dem Kochfeld 4 automatisch einschaltbar und zum anderen in Abhängigkeit einer Betätigung des Eingabebereichs 16, 18, 20 und/oder eines Zeitablaufs eines in der Aufstellgerätsteuerung integrierten Timers automatisch ausschaltbar ist.

Ferner weist das Aufstellgerät 8 bei dem vorliegenden Ausführungsbeispiel eine mit dem Energiespeicher 22 energieübertragend und mit der Aufstellgerätsteuerung signalübertragend verbundene Aufstellgerätbetriebsanzeige 24 zur Anzeige eines Betriebs des Aufstellgeräts 8 auf, wobei die Aufstellgerätbetriebsanzeige 24 zur Anzeige einer Beheizung des Aufstellgeräts 8 mittels einer Kochstelle 6 des Kochfelds 4, auf der das Aufstellgerät 8 aufgestellt ist, ausgebildet ist.

Erfindungsgemäß ist der Energiespeicher 22 als ein nicht aufladbarer und optional nicht wechselbarer Energiespeicher ausgebildet und der Energiespeicher 22, die Aufstellgerätsteuerung, die Aufstellgerätsendeeinheit, die Aufstellgeräteingabeeinheit 14 und die Aufstellgerätbetriebsanzeige 24 sind derart aufeinander abgestimmt ausgebildet und eingerichtet, dass die Energieversorgung der Aufstellgerätsteuerung, der Aufstellgerätsendeeinheit, der Aufstellgeräteingabeeinheit 14 und der Aufstellgerätbetriebsanzeige 24 bei einer täglichen Nutzung des Aufstellgeräts 8 von mindestens 30 min. über eine Lebensdauer des Aufstellgeräts 8 von mindestens zehn Jahren lediglich mittels des Energiespeichers 22 gewährleistet ist.

Darüber hinaus sind die Aufstellgerätsteuerung, die Aufstellgerätsendeeinheit, die Aufstellgeräteingabeeinheit 14, die Aufstellgerätbetriebsanzeige 24 und der Energiespeicher 22 jeweils vollständig in dem Griff 12 des Aufstellgeräts 8 angeordnet.

Das Kochfeld 4 weist erfindungsgemäß eine mit der Kochfeldsteuerung signalübertragend verbundene, nicht dargestellte Kochfeldempfangseinheit zum Empfang des mittels der Aufstellgerätsendeeinheit an das Kochfeld 4 gesandten Benutzerbefehls auf, wobei die Kochfeldsteuerung derart ausgebildet und eingerichtet ist, dass die Heizleistung der jeweiligen Heizung zum einen mittels der jeweiligen Kochfeldeingabeeinheit 10 und zum anderen mittels des vorgenannten Benutzerbefehls einstellbar ist.

Wie oben bereits ausgeführt, weist das Kochfeld 4 hier eine Mehrzahl von Kochstellen 6 auf, wobei die Kochfeldsteuerung und die Aufstellgerätsteuerung derart ausgebildet und eingerichtet sind, dass eine automatische Zuordnung des auf eine der Mehrzahl von Kochstellen 6 aufgestellten Aufstellgeräts 8 zu dieser Kochstelle 6 derart erfolgt, dass die dieser Kochstelle 6 zugeordnete Kochfeldeingabeeinheit 10 mittels der Zuordnung automatisch aktivierbar ist, wobei diese Kochfeldeingabeeinheit 10 mittels der Zuordnung im Vergleich zu einem Rest der Kochfeldeingabeeinheiten optisch hervorhebbar, nämlich hinterleuchtbar, ist. In dem aktivierten Zustand der Kochfeldeingabeeinheit 10 ist mittels dieser Kochfeldeingabeeinheit 10 eine manuelle Einstellung der Heizleistung der Heizung der Kochstelle 6 ermöglicht, die dieser Kochfeldeingabeeinheit 10 zugeordnet ist.

Die jeweilige Kochfeldeingabeeinheit 10 weist ferner eine Assistenzfunktionsanzeige 26 auf, wobei mittels der Assistenzfunktionsanzeige 26 eine Vornahme einer mittels des vorgenannten Benutzerbefehls vorgenommenen Einstellung der Heizleistung der Heizung anzeigbar ist, auf deren zugeordneter Kochstelle 6 das Aufstellgerät 8 aufgestellt ist. Die Assistenzfunktionsanzeige 26 ist hier als eine nicht dargestellte Hinterleuchtung eines ansonsten für den Benutzer kaum sichtbaren Buchstabens "A" der Kochfeldeingabeeinheit 10 ausgebildet.

Nachfolgend werden die Funktionsweisen des erfindungsgemäßen Aufstellgeräts und des erfindungsgemäßen Systems sowie das erfindungsgemäße Verfahren exemplarisch näher erläutert.

Zunächst befindet sich das Kochfeld 4 des Systems 2 in einem ausgeschalteten Zustand. Auf der Kochstelle 6 des Kochfelds 4 ist das mit nicht dargestelltem Wasser gefüllte Aufstellgerät 8 aufgestellt. Das Aufstellgerät 8 ist ebenfalls ausgeschaltet, also deaktiviert. Entsprechend ist die Heizleistung der Heizung, die der Kochstelle 6 mit dem Aufstellgerät 8 zugeordnet ist, weder mittels der korrespondierenden Kochfeldeingabeeinheit 10 noch mittels der Aufstellgeräteingabeeinheit 14 manuell einstellbar.

Zwecks Erhitzung des in dem Aufstellgerät 8 befindlichen Wassers wird das Kochfeld 4 auf dem Fachmann an sich bekannte Art und Weise eingeschaltet, also aktiviert.

Aufgrund der vorgenannten Aktivierung des Kochfelds 4 erfolgt die automatische Zuordnung des auf eine der Mehrzahl von Kochstellen 6 aufgestellten Aufstellgeräts 8 zu dieser Kochstelle 6 nun derart, dass die dieser Kochstelle 6 zugeordnete Kochfeldeingabeeinheit 10 mittels der Zuordnung automatisch aktiviert wird, wobei diese Kochfeldeingabeeinheit 10 mittels der Zuordnung im Vergleich zu einem Rest der Kochfeldeingabeeinheiten und zu einem Rest einer Oberfläche des Kochfelds 4 optisch hervorgehoben wird. Zu diesem Zweck wird die Kochfeldeingabeeinheit 10, die der Kochstelle 6 mit dem Aufstellgerät 8 zugeordnet ist, derart hinterleuchtet, dass die aus der Fig.1 ersichtlichen Ziffern 1 bis 9 und der Buchstabe "B", die ansonsten für den Benutzer kaum sichtbar sind, für den Benutzer des Systems 2 gut sichtbar sind. Die Ziffern 1 bis 9 stehen dabei auf dem Fachmann an sich bekannte Art und Weise für jeweils eine bestimmte und vorher festgelegte Heizleistung, die mittels eines Fingerdrucks auf die jeweilige Ziffer auswählbar ist. Der Buchstabe "B" steht für eine sogenannte Booster-Heizleistung, bei der die der Kochfeldeingabeeinheit 10 zugeordnete Heizung mit der für diese Heizung maximalen Heizleistung angesteuert wird und die ebenfalls mittels Fingerdruck auswählbar ist.

Um nun die gewünschte Heizleistung für die Heizung einzustellen, die der Kochstelle 6 mit dem aufgestellten Aufstellgerät 8 zugeordnet ist, kann der Benutzer zum einen eine der Ziffern 1 bis 9 oder den Buchstaben "B" der Kochfeldeingabeeinheit 10 mit dem Finger antippen und damit die dazu korrespondierende Heizleistung auswählen.

Zusätzlich dazu hat der Benutzer ferner die Möglichkeit, die gewünschte Heizleistung für die vorgenannte Heizung mittels des Aufstellgeräts 8 einzustellen.

Hierfür ergreift der Benutzer beispielsweise mit einer Hand den Griff 12 des Aufstellgeräts 8. Die oben genannte Elektronik des Aufstellgeräts 8 wird zum Beispiel mittels eines Schwingungssensors der Aufstellgerätsteuerung aufgeweckt, also aktiviert, so dass die Eingabebereiche 16, 18, 20 der Aufstellgeräteingabeeinheit 14 hinterleuchtet werden. Der Benutzer kann nun die gewünschte Heizleistung mittels der Aufstellgeräteingabeeinheit 14, nämlich mittels der Berührung eines der Eingabebereiche 16, 18, 20, auswählen, also einstellen. Sobald der Benutzer beispielsweise den Eingabebereich 20 mittels eines Fingers gedrückt hat, wird der diesem Eingabebereich 20 zugeordnete Benutzerbefehl zur Einstellung einer vorher festgelegten Heizleistung für die der Kochstelle 6 mit dem aufgestellten Aufstellgerät 8 mittels der Aufstellgerätsendeeinheit auf dem Fachmann an sich bekannte Art und Weise an die Kochfeldempfangseinheit übertragen.

Aufgrund des nun in der Kochfeldsteuerung vorliegenden Benutzerbefehls wird zum einen die der Kochstelle 6 mit dem aufgestellten Aufstellgerät 8 zugeordnete Heizung mittels der Kochfeldsteuerung mit der vorher festgelegten Heizleistung angesteuert, so dass das Aufstellgerät 8 mit dem darin befindlichen Wasser beheizt wird. Zum anderen wird der Buchstabe "A" der Kochfeldeingabeeinheit 10 mittels der dazu korrespondierenden Hinterleuchtung derart hinterleuchtet, dass der ansonsten für den Benutzer kaum sichtbare Buchstabe "A" für den Benutzer gut sichtbar ist. Der Buchstabe "A" entspricht dabei der Assistenzfunktionsanzeige, mittels der die Vornahme einer mittels des vorgenannten Benutzerbefehls vorgenommenen Einstellung der Heizleistung bei dem vorliegenden Ausführungsbeispiel angezeigt wird. Der Buchstabe "A" ist gemäß dieser Beschreibung als Platzhalter für einen oder mehrere beliebige Buchstaben, Ziffern oder Symbole zu verstehen.

Nachdem die Heizleistung der Heizung für die Kochstelle 6 mit dem aufgestellten Aufstellgerät 8 auf die oben genannte Art und Weise ausgewählt worden ist, wird die Hinterleuchtung der Eingabebereiche 16, 18, 20 der Aufstellgeräteingabeeinheit 14 in Abhängigkeit der vorgenannten Betätigung des Eingabebereichs 20 und/oder eines Zeitablaufs des in der Aufstellgerätsteuerung integrierten Timers wieder automatisch ausgeschaltet. Ein erneutes Einschalten der Hinterleuchtung der Eingabebereiche 16, 18, 20 der Aufstellgeräteingabeeinheit 14 erfolgt wiederum in Abhängigkeit einer Annäherung der Hand des Benutzers an das Aufstellgerät 8 und/oder durch eine Berührung des Aufstellgeräts 8 mit der Hand und/oder durch eine Bewegung des Aufstellgeräts 8 und/oder durch eine Interaktion des Benutzers mit dem Kochfeld 4.

Um den Betrieb des Aufstellgeräts 8, nämlich dessen Beheizung durch die Heizung der Kochstelle 6 auf der das Aufstellgerät 8 aufgestellt ist, weiterhin dem Benutzer anzuzeigen, wird die Aufstellgerätbetriebsanzeige 24 des Aufstellgeräts 8 automatisch eingeschaltet. Die Aufstellgerätbetriebsanzeige 24 erfolgt somit unabhängig von einer Hinterleuchtung der Eingabebereiche 16, 18, 20 der Aufstellgeräteingabeeinheit 14.

Wie aus den obigen Ausführungen ersichtlich ist, gibt es hier zwar neun Heizleistungen und eine Booster-Heizleistung, die mittels der Kochfeldeingabeeinheit 10 für die zu dieser Kochfeldeingabeeinheit 10 korrespondierende Kochstelle 6 einstellbar sind, jedoch nur insgesamt drei Eingabebereiche, 16, 18, 20 der Aufstellgeräteingabeeinheit 14, mittels denen also lediglich drei und/oder vier und/oder fünf voneinander verschiedene Heizleistungen mittels des Aufstellgeräts 8 für die dem Aufstellgerät 8 zugeordnete Kochstelle 6 einstellbar sind. Bei der geringeren Anzahl von mittels des Aufstellgeräts 8 auswählbaren Heizleistungen kann es sich beispielsweise um für die Praxis besonders relevante und damit sehr häufig gewählte Heizleistungen handeln. In anderen Ausführungsformen der Erfindung ist es jedoch denkbar, dass die Anzahl der Eingabebereiche der Aufstellgeräteingabeeinheit des Aufstellgeräts der Anzahl der mittels der Kochfeldeingabeeinheit auswählbaren Heizleistungen entspricht.

Aufgrund der erfindungsgemäßen Ausbildung des Aufstellgeräts 8, des Systems 2 mit dem Kochfeld 4 und dem Aufstellgerät 8 und des Verfahrens zum Betrieb des Systems 2 ist somit der Betrieb des Aufstellgeräts 8 und eine damit verbundene Assistenzfunktion bei der Bedienung des Kochfelds 4 des Systems 2 mittels des Aufstellgeräts 8 über die Lebenszeit des Aufstellgeräts 8 ermöglicht, ohne das hierfür eine Ladeinfrastruktur zum Aufladen des in dem Aufstellgerät 8 integrierten Energiespeichers 22 erforderlich ist. Entsprechend sind die Kosten des Aufstellgeräts 8 und des Systems 2 im Vergleich zu Konzepten mit einer derartigen Ladeinfrastruktur wesentlich reduziert. Ferner ist der Platzbedarf an dem Aufstellgerät 8 für die Energieversorgung des Aufstellgeräts 8 erheblich verringert. Aufgrund der nicht vorhandenen Ladeinfrastruktur kann das Aufstellgerät 8 mit einfacheren Mitteln in gewünschter Weise spülmaschinengeeignet ausgebildet werden. Darüber hinaus fällt während der Lebenszeit des Aufstellgeräts 8 kein Sondermüll in Form von ausgewechselten Batterien oder dergleichen an.

Die Erfindung ist nicht auf das vorliegende Ausführungsbeispiel beschränkt. Siehe hierzu beispielsweise die diesbezüglichen Ausführungen in der Beschreibungseinleitung.

Im Unterschied zu dem vorliegenden Ausführungsbeispiel ist es zum Beispiel denkbar, die Hinterleuchtung des mindestens einen Eingabebereichs der Aufstellgeräteingabeeinheit und/oder die Aufstellgerätbetriebsanzeige in Abhängigkeit einer Prozessstatusänderung einzuschalten. Bei der vorgenannten Prozessstatusänderung, also einer Änderung im Betriebszustand des Systems, kann es sich beispielsweise um das Erreichen einer zu der ausgewählten Heizleistung korrespondierenden Solltemperatur der Kochstelle mit dem Aufstellgerät und/oder das Vorliegen einer Fehlermeldung und/oder einer Information für den Benutzer oder dergleichen handeln. Denkbar ist auch, dass die Hinterleuchtung des mindestens einen Eingabebereichs der Aufstellgeräteingabeeinheit und/oder die Aufstellgerätbetriebsanzeige in Abhängigkeit einer Betätigung der Assistenzfunktionsanzeige des Kochfelds erfolgen, sofern die Assistenzfunktionsanzeige auch als ein Bedienelement ausgebildet ist.

## Patentansprüche

1. Aufstellgerät (8) für ein Kochfeld (4), umfassend einen Griff (12) zur Handhabung des Aufstellgeräts (8), eine Aufstellgerätsteuerung, eine Aufstellgerätsendeeinheit zur Signalübertragung von dem Aufstellgerät (8) zu dem Kochfeld (4), eine Aufstellgeräteingabeeinheit (14) mit mindestens einem in dem Griff (12) integrierten Eingabebereich (16, 18, 20) zur Eingabe eines Benutzerbefehls durch einen Benutzer des Aufstellgeräts (8) und einen mit der Aufstellgerätsteuerung, der Aufstellgerätsendeeinheit und der Aufstellgeräteingabeeinheit (14) energieübertragend verbundenen Energiespeicher (22) zur Energieversorgung der Aufstellgerätsteuerung, der Aufstellgerätsendeeinheit und der Aufstellgeräteingabeeinheit (14), wobei die Aufstellgerätsendeeinheit und die Aufstellgeräteingabeeinheit (14) mit der Aufstellgerätsteuerung signalübertragend verbunden sind, und wobei mittels des Benutzerbefehls das Kochfeld (4) ansteuerbar ist, **dadurch gekennzeichnet, dass** der Energiespeicher (22) als ein nicht aufladbarer und nicht wechselbarer Energiespeicher (22) ausgebildet ist.

2. Aufstellgerät (8) nach Anspruch 1, **dadurch gekennzeichnet, dass** der mindestens eine Eingabebereich (16, 18, 20) der Aufstellgeräteingabeeinheit (14) eine ein- und ausschaltbare Hinterleuchtung aufweist, wobei die Hinterleuchtung mittels der Aufstellgerätsteuerung zum einen in Abhängigkeit einer Annäherung einer Hand des Benutzers an das Aufstellgerät (8) und/oder durch eine Berührung des Aufstellgeräts (8) mit der Hand und/oder durch eine Bewegung des Aufstellgeräts (8) und/oder durch eine Interaktion des Benutzers mit dem Kochfeld (4) automatisch einschaltbar und zum anderen in Abhängigkeit einer Betätigung des Eingabebereichs (16, 18, 20) und/oder eines Zeitablaufs eines in der Aufstellgerätsteuerung integrierten Timers automatisch ausschaltbar ist.

3. Aufstellgerät (8) nach Anspruch 1 oder 2, **dadurch gekennzeichnet, dass** das Aufstellgerät (8) eine mit dem Energiespeicher (22) energieübertragend und mit der Aufstellgerätsteuerung signalübertragend verbundene Aufstellgerätbetriebsanzeige (24) zur Anzeige eines Betriebs des Aufstellgeräts (8) aufweist, wobei der Energiespeicher (22), die Aufstellgerätsteuerung, die Aufstellgerätsendeeinheit, die Aufstellgeräteingabeeinheit (14) und die Aufstellgerätbetriebsanzeige (24) derart aufeinander abgestimmt ausgebildet und eingerichtet sind, dass die Energieversorgung der Aufstellgerätsteuerung, der Aufstellgerätsendeeinheit, der Aufstellgeräteingabeeinheit (14) und der Aufstellgerätbetriebsanzeige (24) bei einer täglichen Nutzung des Aufstellgeräts (8) von mindestens 30 min. über eine Lebensdauer des Aufstellgeräts (8) von mindestens zehn Jahren lediglich mittels des Energiespeichers (22) gewährleistet ist, bevorzugt, dass die Aufstellgerätbetriebsanzeige (24) zur Anzeige einer Beheizung des Aufstellgeräts (8) mittels einer Kochstelle (6) des Kochfelds (4), auf der das Aufstellgerät (8) aufgestellt ist, ausgebildet ist.

4. Aufstellgerät (8) nach einem der Ansprüche 1 bis 3, **dadurch gekennzeichnet, dass** die Aufstellgerätsteuerung und/oder die Aufstellgerätsendeeinheit und/oder die Aufstellgeräteingabeeinheit (14) und/oder die Aufstellgerätbetriebsanzeige (24) und/oder der Energiespeicher (22) vollständig in dem Griff (12) des Aufstellgeräts (8) angeordnet sind/ist.

5. System (2), umfassend zum einen ein Kochfeld (4) mit einer Kochfeldsteuerung und mit mindestens einer mittels einer Heizung des Kochfelds (4) beheizbaren Kochstelle (6) und zum anderen ein Aufstellgerät (8) zum Aufstellen auf die mindestens eine Kochstelle (6) zwecks Beheizung des Aufstellgeräts (8) mittels der dieser Kochstelle (6) zugeordneten Heizung, wobei das Kochfeld (4) für die jeweilige Kochstelle (6) eine Kochfeldeingabeeinheit (10) zur manuellen Einstellung einer Heizleistung der dieser Kochstelle (6) zugeordneten Heizung aufweist, und wobei die Heizung und die Kochfeldeingabeeinheit (10) signalübertragend mit der Kochfeldsteuerung verbunden sind, **dadurch gekennzeichnet, dass** das Aufstellgerät (8) nach einem der Ansprüche 1 bis 4 ausgebildet ist und das Kochfeld (4) eine mit der Kochfeldsteuerung signalübertragend verbundene Kochfeldempfangseinheit zum Empfang des mittels der Aufstellgerätsendeeinheit an das Kochfeld (4) gesandten Benutzerbefehls aufweist, wobei die Kochfeldsteuerung derart ausgebildet und eingerichtet ist, dass die Heizleistung der jeweiligen Heizung zum einen mittels der jeweiligen Kochfeldeingabeeinheit (10) und zum anderen mittels des vorgenannten Benutzerbefehls einstellbar ist.

6. System (2) nach Anspruch 5, **dadurch gekennzeichnet, dass** das Kochfeld (4) eine Mehrzahl von Kochstellen (6) aufweist, wobei die Kochfeldsteuerung und die Aufstellgerätsteuerung derart ausgebildet und eingerichtet sind, dass eine automatische Zuordnung des auf eine der Mehrzahl von Kochstellen (6) aufgestellten Aufstellgeräts (8) zu dieser Kochstelle (6) derart erfolgt, dass die dieser Kochstelle (6) zugeordnete Kochfeldeingabeeinheit (10) mittels der Zuordnung automatisch aktivierbar ist, bevorzugt, dass diese Kochfeldeingabeeinheit (10) mittels der Zuordnung im Vergleich zu einem Rest der Kochfeldeingabeeinheiten (10) und/oder zu einem Rest einer Oberfläche des Kochfelds (4) oder einer Kochfeldbedienblende des Kochfelds optisch hervorhebbar ist.

7. System (2) nach Anspruch 6, **dadurch gekennzeichnet, dass** die jeweilige Kochfeldeingabeeinheit (10) eine Assistenzfunktionsanzeige (A) aufweist, wobei mittels der Assistenzfunktionsanzeige (A) eine Vornahme einer mittels des vorgenannten Benutzerbefehls vorgenommenen Einstellung der Heizleistung der Heizung anzeigbar ist, auf deren zugeordneter Kochstelle (6) das Aufstellgerät (8) aufgestellt ist.

8. Verfahren zum Betrieb eines Systems (2) nach einem der Ansprüche 5 bis 7, wonach die Heizleistung der jeweiligen Heizung wahlweise zum einen mittels der Kochfeldeingabeeinheit (10) und zum anderen mittels des vorgenannten Benutzerbefehls eingestellt wird, wobei die Hinterleuchtung des mindestens einen Eingabebereichs (16, 18, 20) der Aufstellgeräteingabeeinheit (14) zum einen in Abhängigkeit einer Annäherung der Hand des Benutzers an das Aufstellgerät (8) und/oder durch eine Berührung des Aufstellgeräts (8) mit der Hand und/oder durch eine Bewegung des Aufstellgeräts (8) und/oder durch eine Interaktion des Benutzers mit dem Kochfeld (4) automatisch eingeschaltet wird und zum anderen in Abhängigkeit einer Betätigung des Eingabebereichs (16, 18, 20) und/oder eines Zeitablaufs des in der Aufstellgerätsteuerung integrierten Timers automatisch ausgeschaltet wird.

9. Verfahren nach Anspruch 8, **dadurch gekennzeichnet, dass** die
Aufstellgerätbetriebsanzeige (24) einen Betrieb des Aufstellgeräts (8), bevorzugt eine Beheizung des Aufstellgeräts (8) mittels einer Kochstelle (6) des Kochfelds (4), auf der das Aufstellgerät (8) aufgestellt ist, unabhängig von einer etwaigen Hinterleuchtung des mindestens einen Eingabebereichs (16, 18, 20) der Aufstellgeräteingabeeinheit (14) automatisch anzeigt.

10. Verfahren nach Anspruch 8 oder 9, **dadurch gekennzeichnet, dass** die automatische Zuordnung des auf eine der Mehrzahl von Kochstellen (6) aufgestellten Aufstellgeräts (8) zu dieser Kochstelle (6) derart erfolgt, dass die dieser Kochstelle (6) zugeordnete Kochfeldeingabeeinheit (10) mittels der Zuordnung automatisch aktiviert wird, bevorzugt, dass diese Kochfeldeingabeeinheit (10) mittels der Zuordnung im Vergleich zu einem Rest der Kochfeldeingabeeinheiten (10) und/oder zu einem Rest einer Oberfläche des Kochfelds (4) oder einer Kochfeldbedienblende des Kochfelds optisch hervorgehoben wird.

11. Verfahren nach einem der Ansprüche 8 bis 10, **dadurch gekennzeichnet, dass** mittels der Assistenzfunktionsanzeige (A) die Vornahme einer mittels des vorgenannten Benutzerbefehls vorgenommenen Einstellung der Heizleistung angezeigt wird.
